# EUROPÄISCHE PATENTSCHRIFT

(11) **EP 3 119 536 B1**
(45) Veröffentlichungstag und Bekanntmachung des Hinweises auf die Patenterteilung: **21.06.2023**
(21) Anmeldenummer: 15709161.2
(22) Anmeldetag: 10.03.2015
(51) Int. Cl.: B08B 9/08

(54) **SYSTEM UND VERFAHREN ZUM RÜCKGEWINNEN VON FLÜSSIGEN ODER FLIESSFÄHIGEN CHEMIKALIEN**
SYSTEM AND METHOD FOR RECOVERING LIQUID OR FLOWABLE CHEMICALS
SYSTÈME ET PROCÉDÉ DE RÉCUPÉRATION DE PRODUITS CHIMIQUES LIQUIDES OU COULANTS

(30) Priorität: 18.03.2014 DE 102014103692; 18.03.2014 US 201461954650 P
(43) Veröffentlichungstag der Anmeldung: 25.01.2017
(73) Patentinhaber: BASF SE, 67056 Ludwigshafen am Rhein (DE)
(72) Erfinder: HAMMON, Ulrich, 68163 Mannheim (DE); WALTER, Thomas, 67454 Haßloch (DE)
(86) Internationale Anmeldenummer: PCT/EP2015/054964
(87) Internationale Veröffentlichungsnummer: WO 2015/140010

(56) Entgegenhaltungen:
- EP-A1- 1 705 170
- US-A- 2 779 476
- US-A- 3 428 072
- US-A1- 2008 210 262
- US-B2- 8 198 392

## Beschreibung

Die vorliegende Erfindung bezieht sich auf ein System und ein Verfahren zum Rückgewinnen von flüssigen oder fließfähigen Chemikalien in chemischen Anlagen.

Verfahren und Vorrichtungen zum Rückgewinnen von Chemikalien in chemischen Anlagen sind im Stand der Technik prinzipiell bekannt. So wird in EP 1 705 170 A1 ein Rückgewinnungsverfahren für flüssige chemische Produkte in Anlagen beschrieben. Darin werden Reste von flüssigen chemischen Produkten, die in Anlagen einer chemischen Produktionsstätte zurückbleiben, wiedergewonnen. Konkret werden die chemischen Produkte aus den einzelnen Anlagen durch Ausgabeleitungen an deren Boden gesammelt und durch ihre eigene Schwerkraft in eine gemeinsame geneigte Sammelleitung geleitet, die unterhalb der Anlagen angeordnet ist. Mittels Schwerkraft fließen die chemischen Produkte durch die geneigte Sammelleitung in einen Auffangbehälter, der unterhalb der geneigten Sammelleitung angeordnet ist.

Solche Verfahren und Anlagen sind für eine Reihe von Anwendungen nur bedingt geeignet, insbesondere dort, wo Produkte mit höherer Viskosität wiedergewonnen werden sollen oder wo aus einer Anlage unterschiedliche Chemikalien eingesammelt werden können. Beispiele hierfür sind Produktrückstände in einer Anlage, die abgezogen werden, bevor eine Reinigungsflüssigkeit die Anlage spült, die ebenfalls wiedergewonnen werden soll.

Zum Wiedergewinnen von höher viskosen Chemikalien wird entweder ausreichend Zeit benötigt, damit diese in den Sammelbehälter fließen können, oder die geneigte Sammelleitung muss ein größeres Gefälle aufweisen. Letztere Variante stellt für den Anlagenbau höhere Anforderungen dar, da entweder die Anlagen in die Höhe gebaut werden müssen, oder die Sammelleitung einschließlich Sammelbehälter in größerer Tiefe im Boden vorgesehen werden müssen.

Vor diesem Hintergrund liegt der vorliegenden Erfindung die Aufgabe zugrunde, ein System und ein Verfahren zum Rückgewinnen von flüssigen oder fließfähigen Chemikalien in einer chemischen Anlage bereitzustellen, mit denen die Nachteile des Standes der Technik überwunden werden. Insbesondere ist es ein Ziel, eine einfache und zuverlässige Rückgewinnung der flüssigen oder fließfähigen Chemikalien zu gewährleisten.

Gelöst wird diese Aufgabe durch ein System nach beiliegendem Anspruch 1.

Mittels des erfindungsgemäßen Systems kann das erfindungsgemäße Verfahren nach Anspruch 7 zum Rückgewinnen von flüssigen oder fließfähigen Chemikalien in einer chemischen Anlage ausgeführt werden.

Sofern in der nachfolgenden Beschreibung im Zusammenhang mit dem erfindungsgemäßen System auch Verfahrensmerkmale aufgeführt werden, beziehen sich diese vorzugsweise auf das erfindungsgemäße Verfahren, das nachstehend noch näher definiert wird.

Das erfindungsgemäße System zeichnet sich dadurch aus, dass es einerseits platzsparend ist und andererseits keine oder nur geringe tiefbauliche Maßnahmen zu seiner Errichtung erfordert. Das erfindungsgemäße System kann daher abhängig von der Konfiguration einer chemischen Anlage nachgerüstet werden.

Mit dem erfindungsgemäßen System ist es zudem möglich, sowohl räumlich als auch zeitlich getrennt flüssige oder fließfähige Chemikalien aus den Anlagenteilen abzuführen. Dies trägt beispielsweise dem Umstand Rechnung, dass einzelne Anlagenteile zu unterschiedlichen Zeitpunkten gespült werden müssen. Durch Verwendung der Pumpe kann die Entleerung schnell erfolgen, was für die Gesamtverfügbarkeit der Anlage von Vorteil ist. Besonders vorteilhaft ist, wenn der Anlagenteil aus dem die Flüssigkeit entleert werden soll, unter leichtem Überdruck gestellt werden kann.

Nachfolgend wird die Erfindung detaillierter beschrieben.

Ein erster Gegenstand der vorliegenden Erfindung ist ein System (1) zum Rückgewinnen von flüssigen oder fließfähigen Chemikalien in einer chemischen Anlage (3), umfassend
- zumindest zwei Anlagenteile (3a, 3b) der Anlage (3), die mindestens zwei parallel betriebene Reaktoren sind,
- je Anlagenteil (3a, 3b) zumindest eine Anschlusseinrichtung (5a, 5b), die jeweils am tiefsten Punkt des jeweiligen Anlagenteils (3a, 3b) angeordnet ist,
- zumindest eine gemeinsame Sammelleitung (7), welche unterhalb der Anschlusseinrichtungen (5a, 5b) verläuft und diese miteinander verbindet,
- zumindest einen Sammelbehälter (9), der auf der gleichen Höhe wie oder höher als die zumindest zwei Anlagenteile (3a, 3b) und oberhalb der Sammelleitung (7) angeordnet ist,
- zumindest eine Pumpe (11), die zwischen den Anschlusseinrichtungen (5a, 5b) und dem Sammelbehälter (9) in der Sammelleitung (7) vorgesehen ist, zum Abziehen der in der Sammelleitung (7) zusammengeführten zumindest einen flüssigen oder fließfähigen Chemikalie und Einleiten in den Sammelbehälter (9).

Unter dem Begriff "flüssige oder fließfähige Chemikalien" werden jegliche Flüssigkeiten verstanden, die zur Herstellung und Aufarbeitung eines Produkts sowie zur Reinigung der Anlage (3) eingesetzt werden. Beispiele werden nachstehend in einer bevorzugten Ausführungsform angegeben.

Der Begriff "chemische Anlage" umfasst alle Arten von Anlagen und/oder Vorrichtungen, in denen flüssige oder fließfähige Chemikalien verarbeitet werden. Neben den unterschiedlichsten Reaktoren können dies beispielsweise Destillationskolonnen, Extraktionsapparate, Kristallisatoren, Wärmetauscher, Reaktoren oder Behälter sein.

Gemäß der vorliegenden Erfindung ist die Anlage (3) in zumindest zwei Anlagenteile (3a, 3b) unterteilt, die zwei parallel gefahrene Reaktoren sind.

Am tiefsten Punkt des jeweiligen Anlagenteils (3a, 3b) ist eine Anschlusseinrichtung (5a, 5b) angeordnet, die beispielsweise ein Ventil, ein Schieber, Hahn oder Klappe sein kann. Der tiefste Punkt eines Anlagenteils (3a, 3b) kann beispielsweise von einem Kolonnensumpf gebildet werden.

In dem System (1) ist zumindest ein Sammelbehälter (9) vorgesehen, der auf der gleichen Höhe wie die zumindest zwei Anlagenteile (3a, 3b) und oberhalb der Sammelleitung (7) angeordnet ist. Der Ausdruck "auf gleicher Höhe" bedeutet im Sinne der vorliegenden Erfindung, dass der Sammelbehälter (9) nicht unterhalb des Geländeniveaus angeordnet ist und damit eine Tiefbaumaßnahme erfordert. Der Sammelbehälter (9) ist vielmehr überirdisch angeordnet und in die Anlage (3) eingebunden. Bei dem Sammelbehälter (9) kann es sich um einen Tank handeln, der zwischen oder neben den jeweiligen Anlagenteilen (3a, 3b) angeordnet ist. Somit steht der Sammelbehälter (9) auf der gleichen Höhe wie die Anlagenteile (3a, 3b), zumindest sein tiefster Punkt kann sich auf der Höhe des tiefsten Punkts der entsprechenden Anlagenteile (3a, 3b) befinden.

Es hat sich für das erfindungsgemäße System (1) als vorteilhaft erwiesen, wenn die Sammelleitung (7) unterhalb der zumindest zwei Anlagenteile (3a, 3b) oberirdisch und/oder in einem Kanal (13) verläuft. Im Gegensatz zu der unterirdischen Verlegung, wie sie im Stand der Technik beschrieben ist, bietet eine oberirdische Sammelleitung (7) die Möglichkeit, bestehende chemische Anlagen (3) problemlos nachzurüsten. Ferner wird die Wartung und Reinigung der Sammelleitung (7) durch ein oberirdisches Verlegen erleichtert.

In einer alternativen bzw. ergänzenden Ausführungsform kann die Sammelleitung (7) unterhalb der zumindest zwei Anlagenteile (3a, 3b) in einem Kanal (13) verlaufen. Ein solcher Kanal kann entweder ebenfalls oberirdisch angeordnet sein und die Sammelleitung (7) einhausen, beispielsweise zu deren mechanischem Schutz. Der Kanal (13) kann aber auch leicht unterhalb des Geländeniveaus verlaufen, so dass ein niveaufreies Gelände innerhalb der Anlage (3) geschaffen wird.

Dadurch, dass gemäß einer weiteren Ausführungsform für jede der genannten flüssigen oder fließfähigen Chemikalien eine eigene Sammelleitung (7) und/oder ein eigener Sammelbehälter (9) vorgesehen sind, wird das Rückgewinnen der Chemikalien vereinfacht. So kann beispielsweise zunächst ein Produktrest aus der Anlage (3) abgezogen werden und in einem eigenen Sammelbehälter (9) aufgefangen werden. Danach wird beispielsweise der Reaktor gespült und anschließend das Spülmedium über die Anschlusseinrichtung (5a, 5b) ebenfalls durch die Sammelleitung (7) abgezogen und in einem weiteren Sammelbehälter (9) aufgefangen.

Das System kann dabei so ausgelegt sein, dass ausgehend von der Anschlusseinrichtung (5a, 5b) eine einzige Sammelleitung (7) vorgesehen ist, in welcher vor der Pumpe (11) ein Verteiler vorgesehen ist, um die verschiedenen flüssigen oder fließfähigen Chemikalien in die unterschiedlichen Sammelbehälter (9) zu führen. Eine etwas aufwändigere Lösung stellt das Vorsehen einer eigenen Sammelleitung (7) für jede flüssige oder fließfähige Chemikalie dar.

Es hat sich für die weitere Verwendung und/oder Behandlung der flüssigen oder fließfähigen Chemikalien als vorteilhaft erwiesen, wenn nach dem zumindest einen Sammelbehälter (9) eine zweite Pumpe (15) zum Weiterleiten der jeweiligen flüssigen oder fließfähigen Chemikalie in eine Verwertung, Rezyklierung und/oder Entsorgung vorgesehen ist. Hier kann jeder der Sammelbehälter (9) über eine eigene Pumpe (15) verfügen. Dieser etwas höhere apparative Aufwand wird dadurch kompensiert, dass nicht nach jedem Durchlauf einer der flüssigen oder fließfähigen Chemikalien die Pumpe gereinigt werden muss. Für den Fall, dass lediglich Produktreste und beispielsweise Spülmedien abgezogen werden, ist eine einzige Pumpe (15) ausreichend.

In einer speziellen Ausführungsform des erfindungsgemäßen Systems (1) ist die Pumpe (11) eine selbstansaugende Pumpe. Selbstansaugende Pumpen haben gegenüber normalen Kreiselpumpen den Vorteil, dass die Saugseitenleitung nicht notwendigerweise mit Flüssigkeit gefüllt sein muss, um den Fördervorgang zu starten. Auch können Gas/Flüssigkeits-Gemische gefördert werden, was insbesondere am Ende des Entleervorgangs vorteilhaft ist.

Es hat sich als vorteilhaft erwiesen, wenn das System (1) in sich geschlossen ist. Ein in sich geschlossenes System (1) ist insbesondere dann sinnvoll, wenn die flüssigen oder fließfähigen Chemikalien gesundheitsschädlich, giftig, leicht flüchtig, leicht brennbar, luftempfindlich, geruchsintensiv. Somit gelangen die flüssigen oder fließfähigen Chemikalien nicht nach außen oder werden von der Umgebung kontaminiert.

Ein weiterer Gegenstand der vorliegenden Erfindung ist ein Verfahren zum Rückgewinnen von flüssigen oder fließfähigen Chemikalien in einer chemischen Anlage (3) mittels des erfindungsgemäßen Systems (1), das vorstehend definiert wurde. Das Verfahren umfasst die Schritte
a) Abziehen zumindest einer flüssigen oder fließfähigen Chemikalie aus den zumindest zwei Anlagenteilen (3a, 3b) der Anlage (3) jeweils durch die Anschlusseinrichtung (5a, 5b), die am jeweils tiefsten Punkt des jeweiligen Anlagenteils (3a, 3b) angeordnet ist,
b) Zusammenführen der auf diese Weise abgezogenen flüssigen oder fließfähigen Chemikalien in mindestens die gemeinsame Sammelleitung (7), die unterhalb der Anschlusseinrichtungen (5a, 5b) verläuft und diese miteinander verbindet,
c) Einleiten der in der Sammelleitung (7) zusammengeführten zumindest einen flüssigen oder fließfähigen Chemikalie in zumindest den Sammelbehälter (9), der auf der gleichen Höhe wie oder höher als die zumindest zwei Anlagenteile (3a, 3b) und oberhalb der Sammelleitung (7) angeordnet ist, wobei das Abziehen der zumindest einen flüssigen oder fließfähigen Chemikalie in Schritt a) und/oder das Einleiten in den zumindest einen Sammelbehälter (9) in Schritt c) mittels zumindest der Pumpe (11) ausgeführt werden.

Das erfindungsgemäße Verfahren weist im Wesentlichen die gleichen Vorteile wie das vorstehend beschriebene System (1) auf. Insbesondere können mit dem erfindungsgemäßen Verfahren sowohl räumlich als auch zeitlich getrennt flüssige oder fließfähige Chemikalien aus den Anlagenteilen (3a, 3b) abgeführt werden und Entleervorgänge beschleunigt werden.

Es hat sich für den reibungslosen Verfahrensablauf als vorteilhaft erwiesen, wenn die zumindest eine flüssige oder fließfähige Chemikalie aus dem Sammelbehälter (9) mittels einer zweiten Pumpe (15) einer Verwertung, Rezyklierung und/oder Entsorgung zugeführt wird. Ist der Sammelbehälter als Hochbehälter installiert, kann ggf. die Entnahme aus dem Behälter auch ohne Pumpe (15) erfolgen und nutzt dabei die hydrostatische Höhe als Antriebskraft zur Förderung aus.

Gemäss der vorliegenden Erfindung ist die Verwendung des Systems (1), wie es vorstehend definiert wurde, in Verbindung mit einer Anlage (3) zur Herstellung von (Meth-)Acrolein, (Meth-)Acrylsäure und/oder (Meth-)Acrylester zum Rückgewinnen von (Meth-)Acrolein, (Meth-)Acrylsäure, (Meth-)Acrylsäureester, Waschwasser, Lösungsmitteln wie Biphenyl, Biphenylether, Dimethylphthalat, Diethlyphthalat und/oder Mischungen davon.

Weitere Ziele, Merkmale, Vorteile und Anwendungsmöglichkeiten ergeben sich aus der nachfolgenden Beschreibung von Ausführungsbeispielen der vorliegenden Erfindung anhand der Figuren. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbeziehungen. Es zeigt:

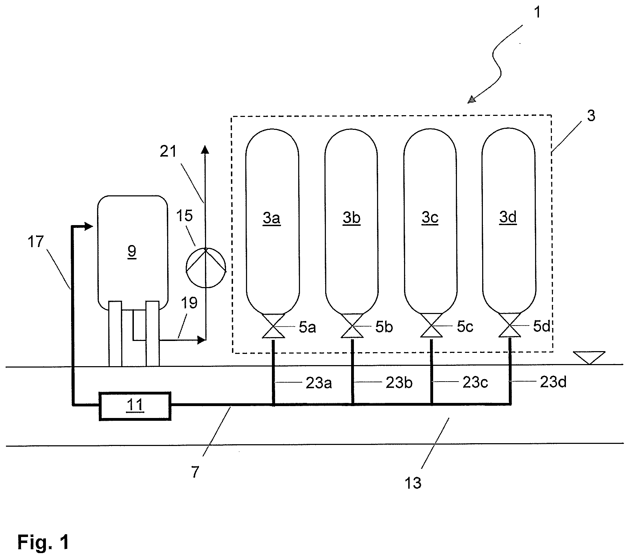

- Figur 1: eine schematische Darstellung des Systems (1) in einer Ausführungsform der Erfindung.

In Figur 1 ist ein erfindungsgemäßes System 1 zum Rückgewinnen von flüssigen oder fließfähigen Chemikalien in einer chemischen Anlage 3 schematisch dargestellt. In dieser Ausführungsform wird die chemische Anlage 3 von vier Anlagenteilen 3a, 3b, 3c, 3d gebildet. Die Zahl der Anlagenteile beträgt mindestens zwei und ist nach oben hin prinzipiell nicht begrenzt. Aus Gründen der technischen Machbarkeit hat sich jedoch eine maximale Zahl von 50 als sinnvoll erwiesen. Die Anlagenteile 3a, 3b, 3c, 3d können gleiche oder unterschiedliche Apparate innerhalb der chemischen Anlage 3 sein. Die Anlagenteile 3a, 3b, 3c, 3d können beispielsweise Reaktoren, Destillationskolonnen, Extraktionsapparate, Kristallisatoren, Wärmetauscher, Pumpen, Behälter oder Rohrleitungsverbindungen sein. Innerhalb der chemischen Anlage 3 sind mindestens zwei parallel betriebene Reaktoren (3a, 3b), und

können auch mehrere unterschiedliche Anlagenteile 3a, 3b, 3c, 3d angeordnet sein, beispielsweise zwei Reaktoren und zwei Destillationskolonnen.

Jeder Anlagenteil 3a, 3b, 3c, 3d verfügt über eine Anschlusseinrichtung 5a, 5b, 5c, 5d, die am tiefsten Punkt des jeweiligen Anlagenteils 3a, 3b, 3c, 3d angeordnet ist. Bei den Anschlusseinrichtungen 5a, 5b, 5c, 5d handelt es sich insbesondere um Ventile, Schieber, Hähne oder Klappen, aus denen die flüssige oder fließfähige Chemikalie aus dem jeweiligen Anlagenteil 3a, 3b, 3c, 3d abgelassen werden kann. In der Ausführungsform der Figur 1 ist für jede Anschlusseinrichtung 5a, 5b, 5c, 5d eine kurze Verbindungsleitung 23a, 23b, 23c, 23d vorgesehen, welche in die gemeinsame Sammelleitung 7 führt.

In der Abbildung der Figur 1 verläuft die Sammelleitung 7 in einem Kanal 13. Dieser Kanal 13 kann oberirdisch angeordnet sein und die Sammelleitung 7 sowie weitere Einrichtungen einhausen. Mittels einer ersten Pumpe 11, insbesondere einer selbstansaugenden Pumpe, wird die flüssige oder fließfähige Chemikalie aktiv aus der Sammelleitung 7 abgepumpt und mittels einer Verbindungsleitung 17 dem Sammelbehälter 9 zugeführt.

Für den Fall, dass in den jeweiligen Anlagenteilen 3a, 3b, 3c, 3d unterschiedliche flüssige oder fließfähige Chemikalien verarbeitet oder verwendet werden, kann jeweils ein eigener Sammelbehälter 9 vorgesehen sein. So können beispielsweise Produktreste aus den Anlagenteilen 3a, 3b, 3c, 3d zunächst durch die Sammelleitung 7 in einen ersten Sammelbehälter 9 gepumpt werden. Nach dem Spülen des Anlagenteils 3a, 3b, 3c, 3d kann anschließend das Spülmedium ebenfalls durch die Sammelleitung 7 abgepumpt werden. Hier ist es vorteilhaft, wenn ein zweiter Sammelbehälter 9 vorgesehen ist, in den über die Verbindungsleitung 17 und ein in den Figur 1 nicht dargestellten Verteiler eingepumpt wird.

In der Figur 1 ist dem jeweiligen Sammelbehälter 9 nachgeordnet eine Leitung 19, die mittels einer zweiten Pumpe 15 die jeweilige flüssige oder fließfähige Chemikalie aus dem Sammelbehälter 9 wieder abgepumpt und über eine Verbindungsleitung 21 der weiteren Verwendung, beispielsweise einer Verwertung, einer Rezyklierung und/oder einer Entsorgung zugeführt wird. Die Pumpe kann eine Eintauchpumpe sein, wo der Antriebsmotor in Trockenstellung steht und das Pumpengehäuse von dem Fördermedium überflutet ist. Da bei Entleervorgängen häufig Feststoffe sich in der abgelassenen Flüssigkeit befinden, hat sich ein offenes Laufrad bei der Pumpe 15 als vorteilhaft erwiesen.

In einer weiteren Ausführungsform können für die Anlagenteile 3a, 3b, 3c, 3d mehrere Anschlusseinrichtungen 5a, 5b, 5c, 5d an unterschiedlichen Punkten vorgesehen sein. Dies ist dann vorteilhaft, wenn sich in dem jeweiligen Anlagenteil 3a, 3b, 3c, 3d an mehr als einer Stelle flüssige oder fließfähige Chemikalien sammeln, beispielsweise am tiefsten Punkt der Kolonnensumpf und an einem etwas höheren Boden Produktreste. Wie schon erwähnt, kann das Rückgewinnen in einem solchen Fall zu verschiedenen Zeitpunkten stattfinden.

Das erfindungsgemäße System 1 und das erfindungsgemäße Verfahren zum Rückgewinnen von flüssigen oder fließfähigen Chemikalien sind insbesondere in Anlagen zur Herstellung von Acrylsäure geeignet.

## Patentansprüche

1. System (1) zum Rückgewinnen von flüssigen oder fließfähigen Chemikalien in einer chemischen Anlage (3) zur Herstellung von (Meth-)Acrolein, (Meth-)Acrylsäure und/oder (Meth-)Acrylsäureester, umfassend
- zumindest zwei Anlagenteile (3a, 3b) der Anlage (3), wobei die Anlagenteile (3a, 3b) mindestens zwei parallel betriebene Reaktoren sind,
- je Anlagenteil (3a, 3b) zumindest eine Anschlusseinrichtung (5a, 5b), die jeweils am tiefsten Punkt des jeweiligen Anlagenteils (3a, 3b) angeordnet ist,
- zumindest eine gemeinsame Sammelleitung (7), welche unterhalb der Anschlusseinrichtungen (5a, 5b) verläuft und diese miteinander verbindet,
- zumindest einen Sammelbehälter (9), der auf der gleichen Höhe wie oder höher als die zumindest zwei Anlagenteile (3a, 3b) und oberhalb der Sammelleitung (7) angeordnet ist,
- zumindest eine Pumpe (11), die zwischen den Anschlusseinrichtungen (5a, 5b) und dem Sammelbehälter (9) in der Sammelleitung (7) vorgesehen ist, zum Abziehen der in der Sammelleitung (7) zusammengeführten zumindest einen flüssigen oder fließfähigen Chemikalie und Einleiten in den Sammelbehälter (9),
wobei die flüssige oder fließfähige Chemikalie (Meth-)Acrolein, (Meth-)Acrylsäure, (Meth-)Acrylsäureester, Waschwasser, Lösungsmittel wie Biphenyl, Biphenylether, Dimethylphthalat, Diethlyphthalat und/oder Mischungen davon umfasst.

2. System (1) nach Anspruch 1, wobei die Sammelleitung (7) unterhalb der zumindest zwei Anlagenteile (3a, 3b) oberirdisch und/oder in einem Kanal (13) verläuft.

3. System (1) nach einem der Ansprüche 1 bis 2, wobei für jede der flüssigen oder fließfähigen Chemikalien eine eigene Sammelleitung (7) und/oder ein eigener Sammelbehälter (9) vorgesehen sind.

4. System (1) nach einem der Ansprüche 1 bis 3, wobei nach dem zumindest einen Sammelbehälter (9) eine zweite Pumpe (15) zum Weiterleiten der jeweiligen Chemikalie in eine Verwertung, Rezyklierung und/oder Entsorgung vorgesehen ist.

5. System (1) nach einem der Ansprüche 1 bis 4, wobei die Pumpe (11) eine selbstansaugende Pumpe ist.

6. System (1) nach einem der Ansprüche 1 bis 5, wobei das System (1) in sich geschlossen ist.

7. Verfahren zum Rückgewinnen von flüssigen oder fließfähigen Chemikalien in einer chemischen Anlage (3) zur Herstellung von (Meth-)Acrolein, (Meth-)Acrylsäure und/oder (Meth-)Acrylsäureester mittels eines Systems (1) nach einem der Ansprüche 1 bis 6, umfassend die Schritte
a) Abziehen zumindest einer flüssigen oder fließfähigen Chemikalie aus den zumindest zwei Anlagenteilen (3a, 3b) der Anlage (3) jeweils durch die Anschlusseinrichtung (5a, 5b), die am jeweils tiefsten Punkt des jeweiligen Anlagenteils (3a, 3b) angeordnet ist,
b) Zusammenführen der auf diese Weise abgezogenen flüssigen oder fließfähigen Chemikalien in mindestens die gemeinsame Sammelleitung (7), die unterhalb der Anschlusseinrichtungen (5a, 5b) verläuft und diese miteinander verbindet,
c) Einleiten der in der Sammelleitung (7) zusammengeführten zumindest einen flüssigen oder fließfähigen Chemikalie in zumindest den Sammelbehälter (9),
der auf der gleichen Höhe wie oder höher als die zumindest zwei Anlagenteile (3a, 3b) und oberhalb der Sammelleitung (7) angeordnet ist,
wobei das Abziehen der zumindest einen flüssigen oder fließfähigen Chemikalie in Schritt a) und/oder das Einleiten in den zumindest einen Sammelbehälter (9) in Schritt c) mittels zumindest der Pumpe (11) ausgeführt werden wobei die flüssige oder fließfähige Chemikalie (Meth-)Acrolein, (Meth-)Acrylsäure, (Meth-)Acrylsäureester, Waschwasser, Lösungsmittel wie Biphenyl, Biphenylether, Dimethylphthalat, Diethlyphthalat und/oder Mischungen davon umfasst.

8. Verfahren nach Anspruch 7, wobei die zumindest eine flüssige oder fließfähige Chemikalie aus dem Sammelbehälter (9) mittels einer zweiten Pumpe (15) einer Verwertung, Rezyklierung und/oder Entsorgung zugeführt wird.

## Claims

1. A system (1) for recovering liquid or free-flowing chemicals in a chemical plant (3) for producing (meth)acrolein, (meth)acrylic acid and/or (methy)acrylic ester, comprising
- at least two plant sections (3a, 3b) of the plant (3), wherein the plant sections (3a, 3b) are at least two reactors operated in parallel,
- for each plant section (3a, 3b) at least one connecting device (5a, 5b) arranged at the lowest point in each plant section (3a, 3b),
- at least one common collecting line (7) which runs beneath the connecting devices (5a, 5b) and connects them to one another,
- at least one collecting vessel (9) arranged at the same height as or higher than the at least two plant sections (3a, 3b) and above the collecting line (7),
- at least one pump (11) provided in the collecting line (7) between the connecting devices (5a, 5b) and the collecting vessel (9) for drawing off the at least one liquid or free-flowing chemical combined in the collecting line (7) and introducing it into the collecting vessel (9),
wherein the liquid or free-flowing chemical encompasses (meth)acrolein, (meth)acrylic acid, (meth)acrylic ester, scrubbing water, solvents such as biphenyl, biphenyl ether, dimethyl phthalate, diethyl phthalate and/or mixtures thereof.

2. The system (1) according to claim 1, wherein the collecting line (7) running beneath the at least two plant sections (3a, 3b) runs above the ground and/or in a sewer (13).

3. The system (1) according to either of claims 1 and 2, wherein a dedicated collecting line (7) and/or a dedicated collecting vessel (9) is/are provided for each of the liquid or free-flowing chemicals.

4. The system (1) according to any of claims 1 to 3, wherein the at least one collecting vessel (9) is followed downstream by a second pump (15) provided for conduction of the respective chemical onward into a utilization, recycling and/or disposal operation.

5. The system (1) according to any of claims 1 to 4, wherein the pump (11) is a self-priming pump.

6. The system (1) according to any of claims 1 to 5, wherein the system (1) is intrinsically closed.

7. A method of recovering liquid or free-flowing chemicals in a chemical plant (3) for producing (meth)acrolein, (methy)acrylic acid and/or (meth)acrylic ester by means of a system (1) according to any of claims 1 to 6, comprising the steps of
a) drawing off at least one liquid or free-flowing chemical from the at least two plant sections (3a, 3b) of the plant (3), in each case through a connecting device (5a, 5b) arranged at the lowest point in each plant section (3a, 3b),
b) combining the liquid or free-flowing chemicals drawn off in this way in at least one common collecting line (7) which runs beneath the connecting devices (5a, 5b) and connects them to one another,
c) introducing the at least one liquid or free-flowing chemical combined in the collecting line (7) in at least one collecting vessel (9) arranged at the same height as or higher than the at least two plant sections (3a, 3b) and above the collecting line (7),
wherein the drawing-off of the at least one liquid or free-flowing chemical in step a) and/or the introduction into the at least one collecting vessel (9) in step c) is/are executed by means of at least one pump (11)
wherein the liquid or free-flowing chemical encompasses (meth)acrolein, (meth)acrylic acid, (meth)acrylic ester, scrubbing water, solvents such as biphenyl, biphenyl ether, dimethyl phthalate, diethyl phthalate and/or mixtures thereof.

8. The method according to claim 7, wherein the at least one liquid or free-flowing chemical from the collecting vessel (9) is supplied by means of a second pump (15) to a utilization, recycling and/or disposal operation.

## Revendications

1. Système (1) pour la récupération de produits chimiques liquides ou fluides dans une installation chimique (3) de préparation de (méth)acroléine, d'acide (méth)acrylique et/ou d'ester d'acide (méth)acrylique, comprenant
- au moins deux parties d'installation (3a, 3b) de l'installation (3), les parties d'installation (3a, 3b) étant au moins deux réacteurs exploités en parallèle,
- pour chaque partie d'installation (3a, 3b), au moins un dispositif de raccordement (5a, 5b) qui est agencé à chaque fois au niveau du point le plus bas de la partie d'installation (3a, 3b) respective,
- au moins une conduite collectrice commune (7) qui s'étend en dessous des dispositifs de raccordement (5a, 5b) et qui relie ceux-ci les uns aux autres,
- au moins un récipient collecteur (9) qui est disposé à la même hauteur, ou plus haut, que les au moins deux parties d'installation (3a, 3b) et au-dessus de la conduite collectrice (7),
- au moins une pompe (11) qui est prévue entre les dispositifs de raccordement (5a, 5b) et le récipient collecteur (9) dans la conduite collectrice (7), pour le pompage de l'au moins un produit chimique liquide ou fluide réuni dans la conduite collectrice (7) et pour le conduire dans le récipient collecteur (9), le produit chimique liquide ou fluide comprenant de la (méth)acroléine, de l'acide (méth)acrylique, de l'ester d'acide (méth)acrylique, de l'eau de lavage, du solvant comme du biphényle, l'éther de biphényle, le phtalate de diméthyle, le phtalate de diéthyle et/ou des mélanges correspondants.

2. Système (1) selon la revendication 1, la conduite collectrice (7) s'étendant, en dessous des au moins deux parties d'installation (3a, 3b), en surface et/ou dans un canal (13),

3. Système (1) selon l'une quelconque des revendications 1 à 2, dans lequel, pour chacun des produits chimiques liquides ou fluides, sont prévus une conduite collectrice (7) individuelle et/ou un récipient collecteur (9) individuel.

4. Système (1) selon l'une quelconque des revendications 1 à 3, dans lequel, après l'au moins un récipient collecteur (9), une deuxième pompe (15) est prévue pour le transfert du produit chimique respectif dans une valorisation, un recyclage et/ou une élimination.

5. Système (1) selon l'une quelconque des revendications 1 à 4, la pompe (11) étant une pompe auto-aspirante.

6. Système (1) selon l'une quelconque des revendications 1 à 5, le système (1) étant fermé,

7. Procédé de récupération de produits chimiques liquides ou fluides dans une installation chimique (3) de préparation de (méth)acroléine, d'acide (méth)acrylique et/ou d'ester d'acide (méth)acrylique au moyen d'un système (1) selon l'une quelconque des revendications 1 à 6, comprenant les étapes de
a) pompage d'au moins un produit chimique liquide ou fluide des au moins deux parties d'installation (3a, 3b) de l'installation (3) à chaque fois par le dispositif de raccordement (5a, 5b) qui est à chaque fois disposé au niveau du point le plus bas de la partie d'installation (3a, 3b) respective,
b) réunion des produits chimiques liquides ou fluides pompés de cette manière dans au moins la conduite collectrice (7) qui s'étend en dessous des dispositifs de raccordement (5a, 5b) et qui relie ceux-ci les uns avec les autres,
c) conduite de l'au moins un produit chimique liquide ou fluide réuni dans la conduite collectrice (7) dans au moins le récipient collecteur (9), qui est disposé à la même hauteur, ou plus haut, que les au moins deux parties d'installation (3a, 3b) et au-dessus de la conduite collectrice (7),
le pompage de l'au moins un produit chimique liquide ou fluide dans l'étape a) et/ou la conduite dans l'au moins un récipient collecteur (9) dans l'étape c) étant réalisés au moyen au moins de la pompe (11),
le produit chimique liquide ou fluide comprenant de la (méth)acroléine, de l'acide (méth)acrylique, de l'ester d'acide (méth)acrylique, de l'eau de lavage, du solvant comme du biphényle, l'éther de biphényle, le phtalate de diméthyle, le phtalate de diéthyle et/ou des mélanges correspondants.

8. Procédé selon la revendication 7, l'au moins un produit chimique liquide ou fluide du récipient collecteur (9) étant alimenté au moyen d'une deuxième pompe (15) dans une valorisation, un recyclage et/ou une élimination.
